# EUROPEAN PATENT SPECIFICATION

(11) **EP 4 379 098 B1**
(45) Date of publication and mention of the grant of the patent: **10.12.2025**
(21) Application number: 23793218.1
(22) Date of filing: 13.02.2023
(51) Int. Cl.: C25D 17/00, C25D 17/02

(54) **ELECTROPLATING BATH HAVING SIDE WALL PLATING SOLUTION DRAINAGE FUNCTION AND ELECTROPLATING PRODUCTION LINE**
ELEKTROPLATTIERUNGSBAD MIT DRAINAGEFUNKTION FÜR SEITENWANDPLATTIERUNGSLÖSUNG UND ELEKTROPLATTIERUNGSFERTIGUNGSLINIE
BAIN D'ÉLECTROPLACAGE POSSÉDANT UNE FONCTION DE DRAINAGE DE SOLUTION DE PLACAGE DE PAROI LATÉRALE ET LIGNE DE PRODUCTION D'ÉLECTROPLACAGE

(30) Priority: 18.10.2022 CN 202211275729
(43) Date of publication of application: 05.06.2024
(73) Proprietor: Chongqing Jimat New Material Technology Co., Ltd., Qijiang District, Chongqing 401421 (CN)
(72) Inventor: ZANG, Shiwei, Qijiang District, Chongqing 401421 (CN)
(74) Representative: Novagraaf Group
(86) International application number: PCT/CN2023/075601
(87) International publication number: WO 2024/082492

(56) References cited:
- CN-A- 114 164 478
- CN-U- 208 869 688
- CN-U- 210 367 975
- CN-U- 210 394 572
- CN-U- 213 507 275
- CN-U- 215 887 293
- CN-U- 216 107 281
- US-A- 4 102 772
- US-A- 4 401 522
- US-A- 5 716 509
- US-A1- 2016 060 785

## Description

### TECHNICAL FIELD

The present disclosure relates to the technical field of water electroplating, and in particular relates to an electroplating bath with side walls enabling drainage of a plating solution, and an electroplating production line.

### BACKGROUND

With technological development, surface plating of a flexible film substrate is increasingly popular. In industrial production, the flexible film substrate is usually electroplated with a water electroplating device. Specifically, based on various demands of the main body and plating layer, a water plating solution is prepared, such that the flexible film substrate can be electroplated in a short time through the water plating solution.

In the prior art, an electroplating device usually includes a plurality of electroplating baths configured to supply plating solutions. An electroplating bath is an apparatus configured to electroplate a material, where a metal is deposited on the surface of a material to be electroplated based on an electroplating principle, thereby allowing the purpose of electroplating. However, in the prior art, in order to ensure the concentration of a plating solution during electroplating, it is necessary to form a liquid outlet hole and a liquid inlet hole. Currently, the plating solution outlet hole of an electroplating bath is located at the bottom of the electroplating bath. For example, the patent CN114164478A discloses a horizontal electroplating device, where a plating solution outlet hole of the horizontal electroplating device is formed at the bottom of an electroplating bath, making it extremely inconvenient to maintain the plating solution outlet hole. US5716509A discloses an electrolysis tank, where inlet lines or apertures for the electrolyte at the base of the chamber is located between the cathodically connected workpiece and the anode or below and behind the anode, and at least one overflowtank is connected on or beneath the electrolysis container into which the electrolyte is fed after passing through the electrolysis region and a feed back device for the electrolyte with a filter.

### SUMMARY

### (I) Technical problem to be solved

In view of the shortcomings and deficiencies of the prior art, the present disclosure provides an electroplating bath with side walls enabling drainage of a plating solution, which solves the technical problem that it is inconvenient to maintain a liquid outlet hole formed at a bottom of an electroplating bath in the prior art.

### (II) Technical solution

To achieve the above objective, the present disclosure adopts the following major technical solutions:
In an aspect, the present disclosure provides an electroplating bath with side walls enabling drainage of a plating solution as presented in the appended claims.

In another aspect, the present disclosure also provides an electroplating production line, including a plurality of the electroplating baths, where the plurality of the electroplating baths are connected sequentially, an anode mechanism is provided inside each electroplating bath, and a liquid inlet pipe at a liquid inlet end of an electroplating bath located at a head end of the electroplating production line abuts against the third drainage zone.

### (III) Beneficial effects

The present disclosure has the following beneficial effects:
In the electroplating bath with side walls enabling drainage of a plating solution provided by the present disclosure, a plating solution may enter the first drainage zone 21 through the first overflow hole 212 on the first side plate 211 or may enter the second drainage zone 31 through the second overflow hole 312 on the second side plate 311, and a plating solution in the first drainage zone 21 is drained to the second drainage zone 31 through the third drainage zone 11 and then led out through the plurality of liquid outlet holes 32 on the second side wall 3. In the embodiments of the present disclosure, a plating solution overflowed from the first drainage zone 21 is drained to the second drainage zone 31 through the third drainage zone 11 and then discharged, which reduces the arrangement of liquid outlet holes 32 and the maintenance work and allows the outputting of a plating solution from a side face. Compared with the prior art, a liquid outlet hole is formed on a side wall in the present disclosure, which is convenient for maintenance and replacement of a plating solution.

### BRIEF DESCRIPTION OF THE DRAWINGS

FIG. 1 is a schematic diagram of an overall structure of a first electroplating bath in a specific embodiment of the present disclosure;
FIG. 2 is a schematic diagram of an overall structure of a second electroplating bath in a specific embodiment of the present disclosure;
FIG. 3 is a schematic structural diagram of a first side plate and a second side plate in a specific embodiment of the present disclosure;
FIG. 4 is a schematic structural diagram of a first electroplating bath provided with a liquid outlet valve in a specific embodiment of the present disclosure; and
FIG. 5 is a schematic structural diagram of a second electroplating bath provided with a liquid outlet valve in a specific embodiment of the present disclosure.

### Reference numerals

1: bottom plate; 11: third drainage zone; 12: liquid inlet pipe; 13: anode mechanism;
2: first side wall; 21: first drainage zone; 211: first side plate; 212: first overflow hole;
3: second side wall; 31: second drainage zone; 311: second side plate; 312: second overflow hole; 32: liquid outlet hole; 321: liquid outlet valve; 33: liquid inlet hole; 331: liquid inlet valve;
4: third side wall; and
5: fourth side wall.

### DETAILED DESCRIPTION OF THE EMBODIMENTS

In order to facilitate the understanding of the above technical solutions, the exemplary embodiments of the present disclosure are described in detail below with reference to the accompanying drawings. Although the accompanying drawings show exemplary embodiments of the present disclosure, it should be understood that the present disclosure may be implemented in various forms and should not be limited to the embodiments set forth herein. The embodiments are provided to enable the thorough understanding of the present disclosure and to fully convey the scope of the present disclosure to those skilled in the art.

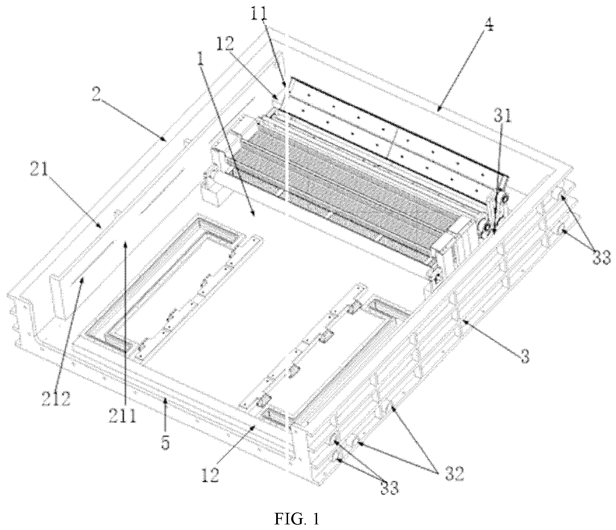

As shown in FIG. 1 to FIG. 3, a specific embodiment of the present disclosure provides an electroplating bath with side walls enabling drainage of a plating solution, including bottom plate 1, and first side wall 2 and second side wall 3 arranged oppositely on the bottom plate 1, where the first side wall 2 is provided with first drainage zone 21, and the first drainage zone 21 includes first side plate 211 with first overflow hole 212; the second side wall 3 is provided with second drainage zone 31, and the second drainage zone 31 includes second side plate 311 with second overflow hole 312; the second side wall 3 is further provided with a plurality of liquid outlet holes 32 communicating with the second drainage zone 31, and a height of each of the plurality of liquid outlet holes 32 is lower than a height of the first overflow hole 212 and a height of the second overflow hole 312; and the bottom plate 1 is provided with third drainage zone 11, and the third drainage zone 11 communicates with the first drainage zone 21 and the second drainage zone 31, respectively, and is configured to guide a plating solution in the first drainage zone 21 to the second drainage zone 31.

Specifically, a plating solution may enter the first drainage zone 21 through the first overflow hole 212 on the first side plate 211 or may enter the second drainage zone 31 through the second overflow hole 312 on the second side plate 311, and a plating solution in the first drainage zone 21 is drained to the second drainage zone 31 through the third drainage zone 11 and then led out through the plurality of liquid outlet holes 32 on the second side wall 3. In this embodiment of the present disclosure, a plating solution overflowed from the first drainage zone 21 is drained to the second drainage zone 31 through the third drainage zone 11 and then discharged, which reduces the arrangement of liquid outlet holes 32 and the maintenance work, allows the outputting of a plating solution from a side face, and is convenient for maintenance and replacement of a plating solution.

As shown in FIG. 1, in some embodiments, the electroplating bath further includes third side wall 4 and fourth side wall 5. It should be noted that, when an electroplating device includes one electroplating bath, the electroplating bath has the third side wall 4 and the fourth side wall 5; and when the electroplating device includes a plurality of electroplating baths, the plurality of electroplating baths are connected end-to-end, an electroplating bath located at a head end of the electroplating device has the third side wall 4, an electroplating bath located at a tail end of the electroplating device has the fourth side wall 5, and an electroplating bath in the middle has the first side wall 2 and the second side wall 3.

Specifically, when the electroplating device includes one electroplating bath, the third drainage zone 11 is located on the third side wall 4, and the third drainage zone 11, the first drainage zone 21, and the second drainage zone 31 are arranged in a U shape on the bottom plate 1. In this case, the plurality of liquid outlet holes 32 are adjacent to the fourth side wall 5.

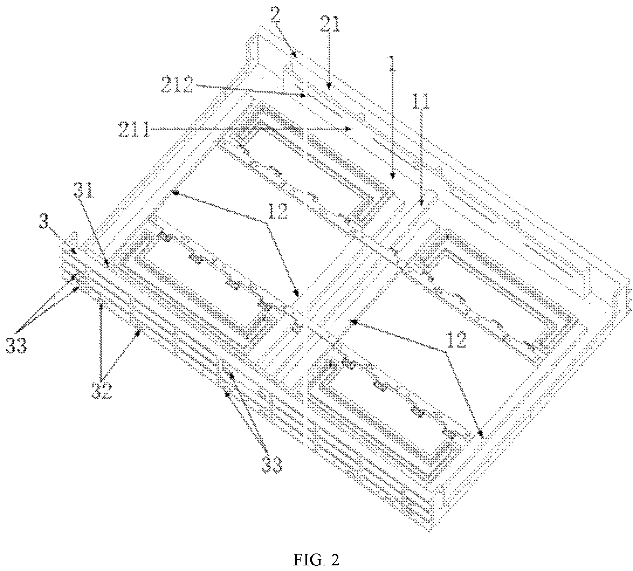

As shown in FIG. 2, in some embodiments, when the electroplating device includes a plurality of electroplating baths, an electroplating bath between first and last electroplating baths only has the first side wall 2 and the second side wall 3, and the third drainage zone 11, the first drainage zone 21, and the second drainage zone 31 are arranged in an I shape on the bottom plate 1. In this case, the plurality of liquid outlet holes 32 are located on the second side wall 3 and away from any one or two ends of the third drainage zone 11.

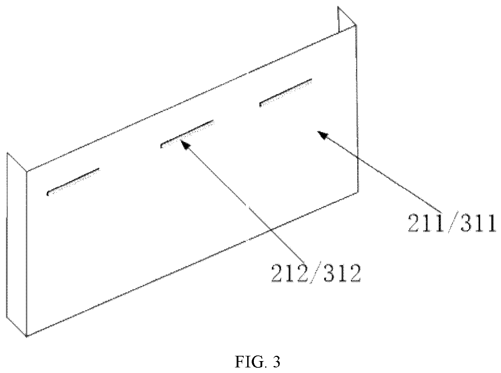

As shown in FIG. 3, in some embodiments, the first overflow hole 212 and the second overflow hole 312 both are strip holes transversely arranged, and are symmetrically arranged on the first side plate 211 and the second side plate 311, respectively. During electroplating, a film is flush with the first overflow hole 212 and the second overflow hole 312, which facilitates the outputting of a plating solution under the film. In this embodiment of the present disclosure, the symmetrical arrangement of the first overflow hole 212 and the second overflow hole 312 on the first side plate 211 and the second side plate 311 respectively can make left and right ends in the electroplating bath balanced in terms of plating solution outputting.

As shown in FIG. 1 and FIG. 2, in some embodiments, the second side wall 3 is further provided with a plurality of liquid inlet holes 33, and the plurality of liquid inlet holes 33 are arranged at two ends of the second side wall 3. In this embodiment of the present disclosure, the arrangement of the plurality of liquid inlet holes 33 at the two ends of the second side wall 3 can make front and rear ends in the electroplating bath balanced in terms of plating solution inputting.

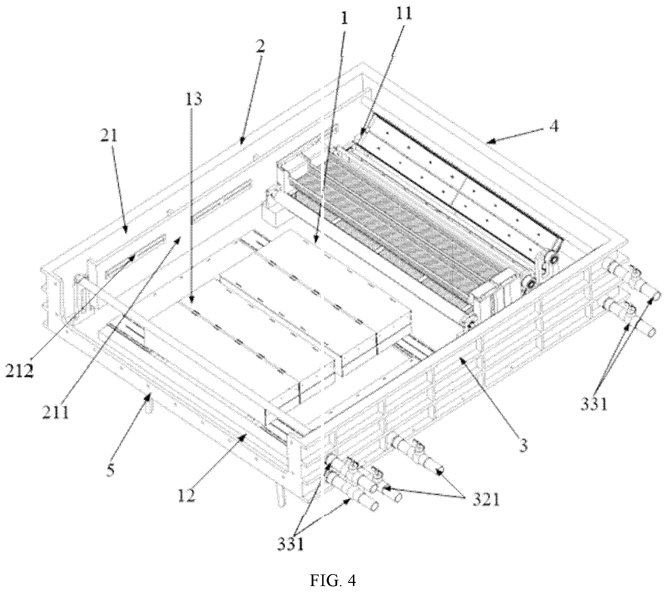

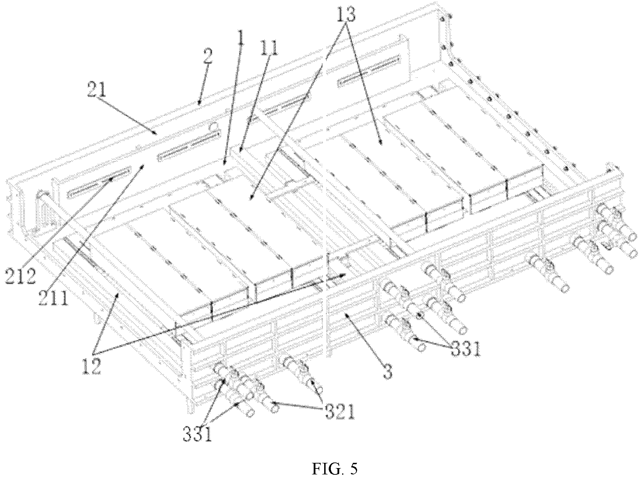

As shown in FIG. 4 and FIG. 5, in some embodiments, the bottom plate 1 is further provided with one or more liquid inlet pipes 12, the one or more liquid inlet pipes 12 is/are arranged at two sides of a plating zone and communicate(s) with the second drainage zone 31, and a side face of the one or more liquid inlet pipes 12 is provided with a plurality of holes. It should be noted that, when the electroplating device includes one electroplating bath, a liquid inlet pipe 12 is arranged at each of a liquid inlet end and a liquid outlet end of the electroplating bath, and a liquid inlet pipe 12 located at the liquid inlet end abuts against the third drainage zone 11, which allows a compact structure of the electroplating bath and reduces a floor space of the electroplating bath. Of course, when the electroplating device includes a plurality of electroplating baths, a liquid inlet pipe 12 at a liquid inlet end of an electroplating bath located at a head end also abuts against the third drainage zone 11.

Thus, the arrangement of the liquid inlet pipe 12 at each of two sides of the plating zone in the electroplating bath and the slow inputting through the plurality of holes on the side face of the liquid inlet pipe 12 not only ensures that plating solution densities at various parts in the electroplating bath remain consistent, but also prevents a film from being unstable in a plating solution due to excessive plating solution inputting, which affects a quality of a coated film.

As shown in FIG. 4 and FIG. 5, each of the plurality of liquid outlet holes 32 is provided with a liquid outlet valve 321, and each of the plurality of liquid inlet holes 33 is provided with a liquid inlet valve 331. In an embodiment of the present disclosure, the outputting and inputting of a plating solution of an electroplating device may be controlled through the liquid outlet valve 321 and the liquid inlet valve 331 at any time.

The present disclosure also provides an electroplating production line, including a plurality of the electroplating baths, where the plurality of the electroplating baths are connected sequentially, anode mechanism 13 is provided inside each electroplating bath, and liquid inlet pipe 12 at a liquid inlet end of an electroplating bath located at a head end of the electroplating production line abuts against the third drainage zone 11. The electroplating production line in this embodiment of the present disclosure can allow the outputting of a plating solution from a side face, reduce the arrangement of liquid outlet holes 32 and the maintenance work, and is convenient for maintenance and replacement of a plating solution. In addition, the electroplating production line of the present disclosure has a compact structure, a reasonable design, and a small floor space.

The present disclosure has the following beneficial effects:
In the electroplating bath of the present disclosure, a plating solution overflowed from the first drainage zone 21 is drained to the second drainage zone 31 through the third drainage zone 11 and then discharged, which reduces the arrangement of liquid outlet holes 32 and the maintenance work, allows the outputting of a plating solution from a side face, and is convenient for maintenance and replacement of a plating solution.

In the electroplating bath of the present disclosure, the symmetrical arrangement of the first overflow hole 212 and the second overflow hole 312 on the first side plate 211 and the second side plate 311 respectively can make left and right ends in the electroplating bath balanced in terms of plating solution outputting.

In the electroplating bath of the present disclosure, the arrangement of the plurality of liquid inlet holes 33 at the two ends of the second side wall 3 can make front and rear ends in the electroplating bath balanced in terms of plating solution inputting.

In the electroplating bath of the present disclosure, the arrangement of the liquid inlet pipe 12 at each of two sides of the plating zone in the electroplating bath and the slow inputting through the plurality of holes on the side face of the liquid inlet pipe 12 not only ensures that plating solution densities at various parts in the electroplating bath remain consistent, but also prevents a film from being unstable in a plating solution due to excessive plating solution inputting, which affects a quality of a coated film.

In the electroplating bath of the present disclosure, the outputting and inputting of a plating solution of an electroplating device may be controlled through the liquid outlet valve 321 and the liquid inlet valve 331 at any time.

It should be understood that in the description of the present disclosure, terms such as "first" and "second" are used merely for the purpose of description, and should not be construed as indicating or implying relative importance, or implicitly indicating the number of technical features denoted. Thus, features defined with "first" and "second" may explicitly or implicitly include one or more of the features. In the description of the present disclosure, "a plurality of" means two or more, unless otherwise specifically defined.

In the present disclosure, unless otherwise clearly specified, the terms such as "arrangement", "interconnection", "connection" and "fixation" are intended to be understood in a broad sense. For example, the "connection" may be a fixed connection, removable connection, or integral connection; may be a mechanical connection or electrical connection; may be a direct connection or indirect connection through an intermediate medium; and may be a communication or interaction between two elements. Those of ordinary skill in the art may understand specific meanings of the above terms in the present disclosure based on specific situations.

In the present disclosure, unless otherwise explicitly specified, when it is described that a first feature is "above" or "below" a second feature, it indicates that the first and second features are in direct contact or the first and second features are in indirect contact through an intermediate medium. In addition, when it is described that the first feature is "over", "above", and "on" the second feature, it indicates that the first feature is directly or obliquely above the second feature, or simply indicates that the first feature is higher than the second feature. When it is described that a first feature is "under", "below", or "beneath" a second feature, it indicates that the first feature is directly or obliquely under the second feature or simply indicates that a horizontal height of the first feature is lower than a horizontal height of the second feature.

In the description of this specification, the description with reference to the terms such as "one embodiment", "some embodiments", "example", "specific example", or "some examples" means that specific features, structures, materials, or characteristics described in connection with the embodiment or example are included in at least one embodiment or example of the present disclosure. In this specification, the schematic expression of the above terms is not necessarily directed to the same embodiment or example. Moreover, the specific features, structures, materials, or characteristics described may be combined in a suitable manner in any one or more embodiments or examples. In addition, those skilled in the art may combine different embodiments or examples described in this specification and characteristics of the different embodiments or examples without any contradiction.

Changes, modifications, substitutions, and variations can be made to the above embodiments by a person of ordinary skill in the art within the scope of the appended claims.

## Claims

1. An electroplating bath with side walls enabling drainage of a plating solution, **characterized by** comprising:
a bottom plate (1), and a first side wall (2) and a second side wall (3) arranged oppositely on the bottom plate (1), wherein
the first side wall (2) is provided with a first drainage zone (21), and the first drainage zone (21) comprises a first side plate (211);
the second side wall (3) is provided with a second drainage zone (31), and the second drainage zone (31) comprises a second side plate (311);
the bottom plate (1) is provided with a third drainage zone (11); and the third drainage zone (11) communicates with the first drainage zone (21) and the second drainage zone (31), respectively, and the third drainage zone (11) is configured to guide a plating solution in the first drainage zone (21) to the second drainage zone (31);
**characterized in that**
the first side plate (211) is provided with a first overflow hole (212), and the second side plate (311) is provided with a second overflow hole (312); and
the second side wall (3) is further provided with a plurality of liquid outlet holes (32) communicating with the second drainage zone (31), and a height of each of the plurality of liquid outlet holes (32) is lower than a height of the first overflow hole (212) and a height of the second overflow hole (312).

2. The electroplating bath with the side walls enabling drainage of the plating solution according to claim 1, **characterized by** further comprising:
a third side wall (4) and a fourth side wall (5), wherein
the third drainage zone (11) is located on the third side wall (4), and the third drainage zone (11), the first drainage zone (21), and the second drainage zone (31) are arranged in a U shape on the bottom plate (1).

3. The electroplating bath with the side walls enabling drainage of the plating solution according to claim 2, **characterized in that**
the plurality of liquid outlet holes (32) are adjacent to the fourth side wall (5).

4. The electroplating bath with the side walls enabling drainage of the plating solution according to claim 1, **characterized in that**
the third drainage zone (11), the first drainage zone (21), and the second drainage zone (31) are arranged in an I shape on the bottom plate (1).

5. The electroplating bath with the side walls enabling drainage of the plating solution according to claim 4, **characterized in that**
the plurality of liquid outlet holes (32) are located on the second side wall (3) and away from any one or two ends of the third drainage zone (11).

6. The electroplating bath with the side walls enabling drainage of the plating solution according to claim 1, **characterized in that**
the first overflow hole (212) and the second overflow hole (312) are strip holes transversely arranged, and the first overflow hole (212) and the second overflow hole (312) are symmetrically arranged on the first side plate (211) and the second side plate (311), respectively.

7. The electroplating bath with the side walls enabling drainage of the plating solution according to claim 1, **characterized in that**
the second side wall (3) is further provided with a plurality of liquid inlet holes (33), and the plurality of liquid inlet holes (33) are arranged at two ends of the second side wall (3).

8. The electroplating bath with the side walls enabling drainage of the plating solution according to claim 7, **characterized in that**
the bottom plate (1) is further provided with liquid inlet pipes (12), the liquid inlet pipes (12) are arranged at two sides of a plating zone and communicate(s) with the second drainage zone (31), and a side face of each of the liquid inlet pipes (12) is provided with a plurality of holes.

9. The electroplating bath with the side walls enabling drainage of the plating solution according to claim 7, **characterized in that**
each of the plurality of liquid outlet holes (32) is provided with a liquid outlet valve (321), and each of the plurality of liquid inlet holes (33) is provided with a liquid inlet valve (331).

10. An electroplating production line, **characterized by** comprising a plurality of the electroplating baths according to any one of claims 1 to 9, wherein
the plurality of the electroplating baths are connected sequentially, an anode mechanism (13) is provided inside each of the plurality of the electroplating baths, and a liquid inlet pipe (12) at a liquid inlet end of an electroplating bath located at a head end of the electroplating production line abuts against the third drainage zone (11).

## Patentansprüche

1. Galvanisierbad mit Seitenwänden, die das Abfließen einer Galvanisierlösung ermöglichen, **dadurch gekennzeichnet, dass** es umfasst:
eine Bodenplatte (1) sowie eine erste Seitenwand (2) und eine zweite Seitenwand (3), die gegenüberliegend auf der Bodenplatte (1) angeordnet sind, wobei
die erste Seitenwand (2) mit einer ersten Abfließzone (21) versehen ist und die erste Abfließzone (21) eine erste Seitenplatte (211) umfasst;
die zweite Seitenwand (3) mit einer zweiten Abfließzone (31) versehen ist und die zweite Abfließzone (31) eine zweite Seitenplatte (311) umfasst;
die Bodenplatte (1) mit einer dritten Abfließzone (11) versehen ist; und die dritte Abfließzone (11) mit der ersten Abfließzone (21) bzw. der zweiten Abfließzone (31) in Verbindung steht und die dritte Abfließzone (11) konfiguriert ist, um eine Galvanisierlösung in der ersten Abfließzone (21) zu der zweiten Abfließzone (31) zu leiten;
**dadurch gekennzeichnet, dass**
die erste Seitenplatte (211) mit einem ersten Überlaufloch (212) versehen ist und die zweite Seitenplatte (311) mit einem zweiten Überlaufloch (312) versehen ist; und
die zweite Seitenwand (3) ferner mit einer Vielzahl von Flüssigkeitsauslasslöchern (32) versehen ist, die mit der zweiten Abfließzone (31) in Verbindung stehen, und eine Höhe jedes aus der Vielzahl von Flüssigkeitsauslasslöchern (32) niedriger ist als eine Höhe des ersten Überlauflochs (212) und eine Höhe des zweiten Überlauflochs (312).

2. Galvanisierbad mit den Seitenwänden, die das Abfließen der Galvanisierlösung ermöglichen, nach Anspruch 1, **dadurch gekennzeichnet, dass** es ferner umfasst:
eine dritte Seitenwand (4) und eine vierte Seitenwand (5), wobei
die dritte Abfließzone (11) sich an der dritten Seitenwand (4) befindet und die dritte Abfließzone (11), die erste Abfließzone (21) und die zweite Abfließzone (31) U-förmig auf der Bodenplatte (1) angeordnet sind.

3. Galvanisierbad mit den Seitenwänden, die das Abfließen der Galvanisierlösung ermöglichen, nach Anspruch 2, **dadurch gekennzeichnet, dass**
die Vielzahl von Flüssigkeitsauslasslöchern (32) an die vierte Seitenwand (5) angrenzen.

4. Galvanisierbad mit den Seitenwänden, die das Abfließen der Galvanisierlösung ermöglichen, nach Anspruch 1, **dadurch gekennzeichnet, dass**
die dritte Abfließzone (11), die erste Abfließzone (21) und die zweite Abfließzone (31) I-förmig auf der Bodenplatte (1) angeordnet sind.

5. Galvanisierbad mit den Seitenwänden, die das Abfließen der Galvanisierlösung ermöglichen, nach Anspruch 4, **dadurch gekennzeichnet, dass**
die Vielzahl von Flüssigkeitsauslasslöchern (32) sich an der zweiten Seitenwand (3) und entfernt von einem oder zwei beliebigen Enden der dritten Abfließzone (11) befinden.

6. Galvanisierbad mit den Seitenwänden, die das Abfließen der Galvanisierlösung ermöglichen, nach Anspruch 1, **dadurch gekennzeichnet, dass**
das erste Überlaufloch (212) und das zweite Überlaufloch (312) quer angeordnete Streifenlöcher sind, und das erste Überlaufloch (212) und das zweite Überlaufloch (312) symmetrisch auf der ersten Seitenplatte (211) bzw. der zweiten Seitenplatte (311) angeordnet sind.

7. Galvanisierbad mit den Seitenwänden, die das Abfließen der Galvanisierlösung ermöglichen, nach Anspruch 1, **dadurch gekennzeichnet, dass**
die zweite Seitenwand (3) ferner mit einer Vielzahl von Flüssigkeitseinlasslöchern (33) versehen ist und die Vielzahl von Flüssigkeitseinlasslöchern (33) an zwei Enden der zweiten Seitenwand (3) angeordnet sind.

8. Galvanisierbad mit den Seitenwänden, die das Abfließen der Galvanisierlösung ermöglichen, nach Anspruch 7, **dadurch gekennzeichnet, dass**
die Bodenplatte (1) ferner mit Flüssigkeitseinlassrohren (12) versehen ist, die Flüssigkeitseinlassrohre (12) an zwei Seiten einer Galvanisierzone angeordnet sind und mit der zweiten Abfließzone (31) in Verbindung stehen, und eine Seitenfläche jedes der Flüssigkeitseinlassrohre (12) mit einer Vielzahl von Löchern versehen ist.

9. Galvanisierbad mit den Seitenwänden, die das Abfließen der Galvanisierlösung ermöglichen, nach Anspruch 7, **dadurch gekennzeichnet, dass**
jedes aus der Vielzahl von Flüssigkeitsauslasslöchern (32) mit einem Flüssigkeitsauslassventil (321) versehen ist und jedes aus der Vielzahl von Flüssigkeitseinlasslöchern (33) mit einem Flüssigkeitseinlassventil (331) versehen ist.

10. Galvanikproduktionslinie, **dadurch gekennzeichnet, dass** sie eine Vielzahl von Galvanisierbädern nach einem der Ansprüche 1 bis 9 umfasst, wobei
die Vielzahl von Galvanisierbädern hintereinander verbunden sind, in jedem aus der Vielzahl von Galvanisierbädern ein Anodenmechanismus (13) bereitgestellt ist, und an einem Flüssigkeitseinlassende eines Galvanisierbads, das sich an einem Kopfende der Galvanikproduktionslinie befindet, ein Flüssigkeitseinlassrohr (12) an der dritten Abfließzone (11) anliegt.

## Revendications

1. Bain de galvanoplastie dont les parois latérales permettent le drainage d'une solution de galvanoplastie, **caractérisé en ce qu'il** comprend :
une plaque de fond (1), et une première paroi latérale (2) et une deuxième paroi latérale (3) agencées en opposition sur la plaque de fond (1), dans lequel
la première paroi latérale (2) est pourvue d'une première zone de drainage (21), et la première zone de drainage (21) comprend une première plaque latérale (211) ;
la deuxième paroi latérale (3) est pourvue d'une deuxième zone de drainage (31), et la deuxième zone de drainage (31) comprend une seconde plaque latérale (311) ;
la plaque de fond (1) est pourvue d'une troisième zone de drainage (11) ; et la troisième zone de drainage (11) communique avec la première zone de drainage (21) et la deuxième zone de drainage (31), respectivement, et la troisième zone de drainage (11) est conçue pour guider une solution de galvanoplastie dans la première zone de drainage (21) vers la deuxième zone de drainage (31) ;
**caractérisé en ce que**
la première plaque latérale (211) est pourvue d'un premier orifice de débordement (212), et la seconde plaque latérale (311) est pourvue d'un second orifice de débordement (312) ; et
la deuxième paroi latérale (3) est en outre pourvue d'une pluralité d'orifices de sortie de liquide (32) communiquant avec la deuxième zone de drainage (31), et une hauteur de chacun de la pluralité d'orifices de sortie de liquide (32) est inférieure à une hauteur du premier orifice de trop-plein (212) et à une hauteur du second orifice de trop-plein (312).

2. Bain de galvanoplastie dont les parois latérales permettent le drainage de la solution de galvanoplastie selon la revendication 1, **caractérisé en ce qu'il** comprend en outre :
une troisième paroi latérale (4) et une quatrième paroi latérale (5), dans lequel
la troisième zone de drainage (11) est située sur la troisième paroi latérale (4), et la troisième zone de drainage (11), la première zone de drainage (21) et la deuxième zone de drainage (31) sont agencées en forme de U sur la plaque de fond (1).

3. Bain de galvanoplastie dont les parois latérales permettent le drainage de la solution de galvanoplastie selon la revendication 2, **caractérisé en ce que**
la pluralité d'orifices de sortie de liquide (32) est adjacente à la quatrième paroi latérale (5).

4. Bain de galvanoplastie dont les parois latérales permettent le drainage de la solution de galvanoplastie selon la revendication 1, **caractérisé en ce que**
la troisième zone de drainage (11), la première zone de drainage (21) et la deuxième zone de drainage (31) sont agencées en forme de I sur la plaque de fond (1).

5. Bain de galvanoplastie dont les parois latérales permettent le drainage de la solution de galvanoplastie selon la revendication 4, **caractérisé en ce que**
la pluralité d'orifices de sortie de liquide (32) sont situés sur la seconde paroi latérale (3) et à l'écart d'une quelconque ou de deux extrémités de la troisième zone de drainage (11).

6. Bain de galvanoplastie dont les parois latérales permettent le drainage de la solution de galvanoplastie selon la revendication 1, **caractérisé en ce que**
le premier orifice de trop-plein (212) et le second orifice de trop-plein (312) sont des orifices en bande agencés transversalement, et le premier orifice de trop-plein (212) et le second orifice de trop-plein (312) sont agencés symétriquement sur la première plaque latérale (211) et la seconde plaque latérale (311), respectivement.

7. Bain de galvanoplastie dont les parois latérales permettent le drainage de la solution de galvanoplastie selon la revendication 1, **caractérisé en ce que**
la deuxième paroi latérale (3) est en outre pourvue d'une pluralité d'orifices d'admission de liquide (33), et la pluralité d'orifices d'admission de liquide (33) sont agencés aux deux extrémités de la deuxième paroi latérale (3).

8. Bain de galvanoplastie dont les parois latérales permettent le drainage de la solution de galvanoplastie selon la revendication 7, **caractérisé en ce que**
la plaque inférieure (1) est en outre pourvue de tuyaux d'arrivée de liquide (12), les tuyaux d'arrivée de liquide (12) sont agencés sur deux côtés d'une zone de galvanoplastie et communiquent avec la deuxième zone de drainage (31), et une face latérale de chacun des tuyaux d'arrivée de liquide (12) est pourvue d'une pluralité d'orifices.

9. Bain de galvanoplastie dont les parois latérales permettent le drainage de la solution de galvanoplastie selon la revendication 7, **caractérisé en ce que**
chacun de la pluralité d'orifices de sortie de liquide (32) est pourvu d'une soupape de sortie de liquide (321), et chacun de la pluralité d'orifices d'entrée de liquide (33) est pourvu d'une soupape d'entrée de liquide (331).

10. Ligne de production de galvanoplastie, **caractérisée en ce qu'**elle comprend une pluralité de bains de galvanoplastie selon l'une quelconque des revendications 1 à 9, dans laquelle
la pluralité de bains de galvanoplastie sont connectés séquentiellement, un mécanisme anodique (13) est prévu à l'intérieur de chacun de la pluralité de bains de galvanoplastie, et un tuyau d'entrée de liquide (12) à une extrémité d'entrée de liquide d'un bain de galvanoplastie situé en tête de la ligne de production de galvanoplastie est en contact avec la troisième zone de drainage (11).
